# EUROPEAN PATENT SPECIFICATION

(11) **EP 3 870 347 B1**
(45) Date of publication and mention of the grant of the patent: **29.05.2024**
(21) Application number: 19787008.2
(22) Date of filing: 22.10.2019
(51) Int. Cl.: C02F 7/00, C02F 1/78, B01F 23/231, B01F 25/21, B01F 25/312

(54) **ASSEMBLY AND METHOD FOR INTRODUCING OXYGEN INTO WATER**
VORRICHTUNG UND VERFAHREN ZUR EINFÜHRUNG VON SAUERSTOFF IN WASSER
ENSEMBLE ET PROCÉDÉ POUR INTRODUIRE DE L'OXYGÈNE DANS DE L'EAU

(30) Priority: 22.10.2018 NL 2021846
(43) Date of publication of application: 01.09.2021
(73) Proprietor: A. Van Der Stoel Holding B.V., 3267 AM Goudswaard (NL)
(72) Inventor: VAN DER STOEL, Andries, 3267 AM Goudswaard (NL)
(74) Representative: Arnold & Siedsma
(86) International application number: PCT/EP2019/078740
(87) International publication number: WO 2020/083919

(56) References cited:
- EP-A1- 1 647 325
- CH-A- 298 515
- JP-A- H07 313 005
- US-A- 4 226 719
- US-A- 6 054 048
- US-B1- 6 848 258

## Description

The present invention relates to an assembly for introducing oxygen into water. The present invention further relates to a method for introducing oxygen into water of a system for plant cultivation by the assembly of present invention. Due to the combination of reactor and specific mixture valves an optimal, homogenous mixture of the oxygen rich water is produced in a reactor and mixed with oxygen poor water present in for examples a plant cultivation system (e.g. a hydroponic system). The resulting mixture comprises an oxygen concentration that is optimal for plant growth.

Plants need oxygen for their growth. A plant absorbs oxygen mostly in aqueous form (i.e. dissolved in water), wherein the oxygen is absorbed through the roots of the plant. Also, nutrient absorption occurs at the root zone of plants due to the presence of oxygen. Oxygen is required to get nutrients into the plant. The oxygen, in reaction with carbohydrates obtained from photosynthesis from the plant forms an energy source for essential plant processes such as, active absorption of essential nutrients such as nitrogen, potassium and phosphorus, maintaining the cell osmotic pressure, dry matter production of the plant and formation of proteins. The availability of oxygen is a factor that is often underestimated for the growth of plants. The amount of oxygen in the substrate on which plants grow greatly influences both the plant itself and the quality of the substrate.

In case of a shortage of oxygen, a plant will switch to anaerobic state (oxygen-free) for its energy supply. The plant absorbs a reduced amount of nutrients eventually resulting in exhaustion of the plant. A lack of oxygen also affects the reactivity of cell membranes, which reduces water absorption. This in turn influences photosynthesis, affecting the formation of sugars that are required for dry matter production. Finally, there are also indications that oxygen stress leads to increased sensitivity to pathogens, resulting in lower yields, less quality or even plant drop outs.

The quality of the substrate on which the plant grows is highly dependent on oxygen. Substrates often contain many microorganisms that affect plant growth, breaking down organic matter, releasing nutrients from the organic material for the plant, and combating pathogens (e.g. fungi and bacteria) by producing compounds for the suppression of diseases and pests. Oxygen is needed for all these processes.

Hydroponics is a method for growing plants on the basis of a hydroculture, wherein use is made of mineral nutrients that are absorbed in water serving as the substrate. Other examples of hydroculture or hydroponics systems are vertical farming, deep-water culture, Deep Flow Technique (DFT) systems, and Ebb & Flow system. Plants can be grown with their roots in the solution of mineral nutrients or only in water or with a combination of mediums such as perlite, gravel, mineral wool, expanded clay or coconut husk. Benefits of hydroponics (hydroculture) is the increased growth rate (up to 20%) of plants as compared to plants grown on soil and their increased yield (at least 25% more) than their soil counterparts. A downside of hydroponics is that it required more knowledge and experience required to successfully operate the system such that plant growth and yield are optimal. The environment, in comparison to soil cultivation, is more artificial where you provide the water, nutrients, light, etc. This means that close monitoring of these inputs are required to maintain the optimal balance for growth.

Drawback in the use of a hydroculture for plant cultivation is the level of oxygen present in water during cultivation. Plants grown in hydroponic systems can quickly deplete the dissolved oxygen in the nutrient solution resulting in poor root aeration. This effect is even accelerated when temperatures are high, for example in a greenhouse. Oxygen from the ambient air diffuses into surface water on contact. However diffusion is a slow process. Because the water used in the cultivation of plants and crops most often further comprises growth supplements such as minerals and salts dissolved into the water, the oxygen uptake capacity of this water is further reduced as compared to water that does not comprise such supplements. Furthermore, the contact area and time of contact of the irrigation water in horticulture and hydroculture is insufficient to obtain a diffusion rate that is high enough to achieve an oxygen concentration in the water that provides optimal growth conditions for the plant.

Several systems are available for hydroculture that make use of addition of oxygen to the irrigation water. For example oxygen is added through diffusion with the outside air to water that is present in large outside tanks or ponds. Large storage tanks are often used to facilitate the diffusion process, however the contact surface with air comprising the oxygen is too small to provide all the water with sufficient oxygen to obtain a oxygen saturation level that is sufficient for optimal plant growth in hydroculture. Also only the upper layers of the water present in the storage tanks take part in the diffusion process. Another way to increase oxygen levels in water is to inject oxygen bubbles into the water. Injecting oxygen as bubbles will increase the contact surface area of the oxygen with the water. However, plants cannot directly take up the oxygen bubbles which in turn need to dissolve into the water, which occurs very slowly and is therefore suboptimal for use in hydroculture. Current applications and techniques may provide oxygen concentration up to 3 to 5 ppm, causing the plant to perform far below it optimal potential. It is believed that plants need water with a minimum oxygen level, such that the availability of oxygen will not be the limiting factor for plant growth.

In Deep Flow Technique (DFT) growth systems, the crop grows on floaters on the water. The roots of the crop are suspended in the water and all nutrients must therefore be present in the water to obtain a constant supply of water, oxygen, and nutrients to the plants. In DFT systems diffusion of oxygen from the air into the water is negligible, because the floaters cover most of the surface area, thereby reducing the surface contact area for oxygen to diffuse into the water. Because of these low oxygen levels in water, crops will not perform without forced addition of oxygen to the water. To oxygenate the water, use is made of an air pump with an air stone to pump bubbles into the nutrient solution. However, the level of oxygen is insufficient for optimal plant growth and yield. Furthermore this system, due to the low oxygen levels is unsuitable for larger plants and plants that need longer period of growth.

Considering the above, there is a need in the art for a plant cultivation system and method to increase the amount of dissolved oxygen in the water used during cultivation such that the growth, growth rate and yield of plants are increased in comparison to plants that are cultivated with conventional techniques. Prior art reactors for oxygenating water are disclosed, for example, in documents US6848258B and US6054048A

It is an object of the present invention, amongst other objects, to address the above need in the art. The object of present invention, amongst other objects, is met by the present invention as outlined in the appended claims.

Specifically, the above object, amongst other objects, is met, according to a first aspect, by the present invention by an assembly for introducing oxygen into water, wherein the assembly is comprised of a coned shaped reactor, a first inlet for providing a flow of pressurized water into the coned shaped reactor, a second inlet for providing pressurized air that comprises oxygen into the coned shaped reactor, and an outlet for transporting the water out of the coned shaped reactor, wherein the first inlet and the second inlet are located at the tapered end of the coned shaped reactor and the outlet is located at the base end of the coned shaped reactor, wherein the outlet comprises one or more outlet valve(s) for providing a venturi effect and for mixing the pressurized water from the reactor with water outside the reactor.

The reactor of the assembly of present invention is in the shape of a cone. At the narrow top of the cone, the reactor walls are closest together and where the reactor body has the smallest circumference, represent the tapered end of the coned shaped reactor. At this tapered end, the second inlet is located to introduce the pressurized air into the reactor and to mix this air comprising oxygen with the pressurized water provided by the first inlet, also located at the tapered end. The base end of the coned shaped reactor represents the other side of the reactor, opposite the tapered end, where the reactor has the largest circumference. Due to the specific coned shape reactor, the flow rate of pressurized water coming into the reactor at the tapered end of the cone and flowing from the tapered end toward the base end of the cone shaped reactor will decrease. This decrease in flow rate will provide an increased oxygen uptake/absorption by the pressurized water (P > 1 atm), since the contact time between the air that comprises the oxygen is increased. Because both the water and oxygen are pressurized, oxygen uptake will be improved. The oxygen levels can exceed 100% saturation levels, because water that has been pressurized can contain higher levels of oxygen, i.e. 110% to 600% of oxygen saturation levels can be achieved.

The outlet comprises one or more outlet valve(s) for providing a venturi effect and for mixing the pressurized water that has been oxygenated from the reactor, with water outside the reactor, such as the water in a basin or pond of irrigation water of the plant cultivation system. During cultivation the plant uses oxygen for its growth, wherein the oxygen levels in the water will decrease dramatically, resulting in oxygen-poor water. In this way, water that is located in the basin or pond outside the reactor that is relative low in oxygen concentration is mixed with water that has been oxygenated inside the reactor. Furthermore without using the venturi outlet valve, the high levels of oxygen present in the water will be lost when the oxygenated water is being released at ambient air pressure (1 atm), since the oxygen will then quickly diffuse directly into the air. Using the venturi outlet valve and the mixing effect, the loss of these high levels of oxygen in water is reduced or even avoided. The mixing of these oxygen rich and oxygen poor water is achieved by one or more venturi outlet valves, resulting in a optimal, homogenous mixture of both the oxygen rich and oxygen poor water and provides water that is optimal for plant growth in for example a hydroponic culture system.

According to the invention, the second inlet comprises an inlet valve for providing a venturi effect for mixing the pressurized water provided by the first inlet with the pressurized air provided by the second inlet, inside the coned shaped reactor. The air is pressurized to 1 to 6 bar to increase the absorption rate of the by the water. Furthermore, a venturi inlet valve is used to mix the pressurized water from the first inlet with the gaseous oxygen in the pressurized air from the second inlet. The flow of pressurized water is forced through an venturi valve that is shaped as such it provides an venturi effect to increase the liquid speed (flow) because of an decrease in diameter (i.e. a short tube-section with a small aperture), and an end section wherein the diameter increases, thereby decreasing liquid speed. The gaseous oxygen provided by the second inlet will be sucked in through the small apertures because of changes in pressure and at the end of the (venturi) outlet, a mixture of water and oxygen will appear. This will leads to a homogeneous mixture of the pressurized water and the pressurized oxygen, thereby increasing the oxygen concentration in the water in the reactor of the plant cultivation system. Air comprising oxygen is pressurized, e.g. by use of an air compressor, and provided to the second inlet comprising an inlet valve that provides a venturi effect; this is the driving force for the high levels of absorption of oxygen in the water. The higher the concentration of gas particles in contact with the liquid, the more gas particles (in our case oxygen) will dissolve in the water. The amount of oxygen absorbed is therefore independent of the pressure of the water. However, to ensure that the oxygen, once it has been absorbed into the water, remains in the water even when the water is no longer in the cone shaped reactor, the water must remain under pressure. If the water pressure is reduced to e.g. 1 bar, the pressurized oxygen in the water would also become depressurized (i.e. at 1 bar) and would escape in the form of air bubbles, lowering the oxygen levels of the water. Because the water is under pressure, the oxygen remains dissolved in the water and under pressure and can be transported without the oxygen concentration decreasing.

According to another preferred embodiment, the present invention relates to the assembly, wherein the pressurized air comprises at least 95 wt% oxygen (O₂), preferably at least 97% oxygen, more preferably at least 98%, even more preferably at least 99%, most preferably 100%. Pressurized non-enriched air may be used in the assembly of present invention, however since it comprises on average 21% oxygen, the absorption of oxygen by the water will occur less efficient and will therefore result in a lower level of oxygenated water. To obtain an oxygen concentration in the water of between 8 to 20 ppm, it is preferred to use air in the assembly of present invention that is comprised of at least 95 wt% oxygen.

According to a preferred embodiment, the present invention relates to the assembly, wherein the assembly further comprises a pump for providing a flow of pressurized water from the first inlet to the outlet of the coned shaped reactor. Water is pressurized to 1 to 6 bar, preferably 2 to 5 bar, more preferably 3 to 4 bar, to provide an increase oxygen capacity of the water to be oxygenated. The higher the pressure of the water, the more oxygen the pressurized water can contain. A pump is used to transport the water wherein the oxygen has been used by plants for cultivation into the reactor via the inlet. Depending on the dimensions of the inlet and the pump speed, the water is pressurized and a flow of pressurized water from the inlet to the outlet of the reactor is provided.

According to a preferred embodiment, the present invention relates to the assembly, wherein the assembly further comprises a compressor for providing a flow of pressurized air at the second inlet into the coned shaped reactor. The air is pressurized to 1 to 6 bar, preferably 2 to 5 bar, more preferably 3 to 4 bar, to increase the absorption rate of the O₂ by the water. The pressurized air is mixed with the pressurized water by use of the venturi inlet valve from the second inlet.

The present invention, according to a second aspect, relates to a method for introducing oxygen into water of a system for plant cultivation by the assembly of present invention, wherein the method comprises the steps of claim 4.

The maximum concentration of dissolved oxygen in water is based on the physical holding capacity of the water. There is an inverse relation between temperature and the amount of oxygen than can be dissolved in water; the holding capacity decreases when the temperature of the water increases. Therefore in summer, when the average temperature is high, low dissolved oxygen levels in water occur. However, in summer plants receive most sunlight and are most active and the request for oxygen is at its peak and oxygen levels are limiting plant growth due to insufficient levels of oxygen present in water. Air comprising oxygen is pressurized, e.g. by use of an air compressor, and provided to the second inlet comprising an inlet valve that provides a venturi effect resulting in high levels of absorption of oxygen in the water. To ensure that the absorbed oxygen remains in the water even when the water is no longer in the cone shaped reactor, the water must remain under pressure, preferably pressurized from 1 to 6 bar. Because the water is under pressure, the oxygen remains dissolved in the water and under pressure and can be transported without the oxygen concentration decreasing. With the method of present invention an oxygen concentration in the water can be achieved of 6 to 20 ppm, preferably 8 to 18 ppm, more preferably 10 to 16 ppm, most preferably 12 to 14 ppm, such that the oxygen levels that are dissolved in water are high enough that it does not limit the plant growth. Oxygen supersaturation of the water can be achieved of at least 120% (O₂ saturation), preferably at least 200%, more preferably at least 400%, most preferably at least 600%.

Furthermore, the outlet of the assembly of present invention comprises a venturi valve that ensures that before the pressure of the oxygen-rich water is lost (and with that the oxygen capacity of the water goes down), the oxygen-rich water is mixed with the oxygen-depleted water.

According to a preferred embodiment, the present invention relates to the method wherein said pressurized air comprises at least 97% oxygen, preferably at least 98%, more preferably at least 99%, most preferably 100%. It may also be possible to use non-enriched air comprising ~21% O₂ in the method of present invention, however this would be very inefficient, due to the low percentage of oxygen as input.

Addition of pressurized air to the pressurized water inside the reactor is performed using an inlet valve at the second inlet for providing a venturi effect and to mix the water with the oxygen and obtain an efficient absorption of O₂ by the water. A venturi inlet is used to mix the liquid water with the gaseous oxygen. The gaseous oxygen will be sucked in through the small apertures because of changes in pressure and at the end of the (venturi) outlet, a homogenous mixture of water and oxygen will be provided in the reactor.

According to yet another preferred embodiment, the present invention relates to the method wherein the reactor is a coned shaped reactor. The specific cone-shape slows down the flow rate of the water, increasing the time the pressurized air is in contact with the pressurized water and thus increasing the absorption of oxygen by the water.

According to a preferred embodiment, the present invention relates to the method wherein the system for plant cultivation is one or more selected from the group consisting of a hydroculture system, hydroponics system, vertical farming, deep-water culture, and Ebb & Flow system. The assembly and method of present invention may be adopted in any of the above mentioned system for plant cultivation or even in irrigation water and systems for soil-based plant cultivation.

According to a preferred embodiment, the present invention relates to the method wherein absorbing of oxygen occurs at a rate of between 0.5 and 30 kg/h, preferably between 2 and 20 kg/h, most preferably between 5 and 15 kg/h.

In the method of present invention pressurized air or gaseous oxygen may be added by the second inlet into the reactor to the pressurized water in the form of bubbles. The oxygen is injected in the form of small bubbles, such that it increases the contact surface of the oxygen with the water inside the reactor. Because the water is brought under pressure, it can absorb more oxygen than when the water comes into contact with air under atmospheric pressure. After the oxygen-enriched water leaves the coned shaped reactor, it is returned to the storage tank or pond of the hydroculture system. Furthermore, the oxygen-enriched water may be used for sprinkling or irrigation in a greenhouse or other form of a hydroculture system, such as NFT.

According to another preferred embodiment, the present invention relates to the method wherein the flow of pressurized water in the reactor is between 2 to 50 L/s, preferably 4 to 25 L/s, more preferably 5 to 10 L/s.

According to another preferred embodiment, the present invention relates to the method, wherein absorption of oxygen occurs at a rate of between 0.70 and 7.0 kg/h and at a temperature of about 25 □C and a water pressure of about 3.5 bar

According to another preferred embodiment, the present invention relates to the method wherein in step a) at most 20 g ozone (O₃) per m3 of pressurized water is added. After addition of ozone to the water, the ozone quickly disintegrates into OH-radicals, producing O₂.

The present invention will be further detailed in the following figures and example wherein:

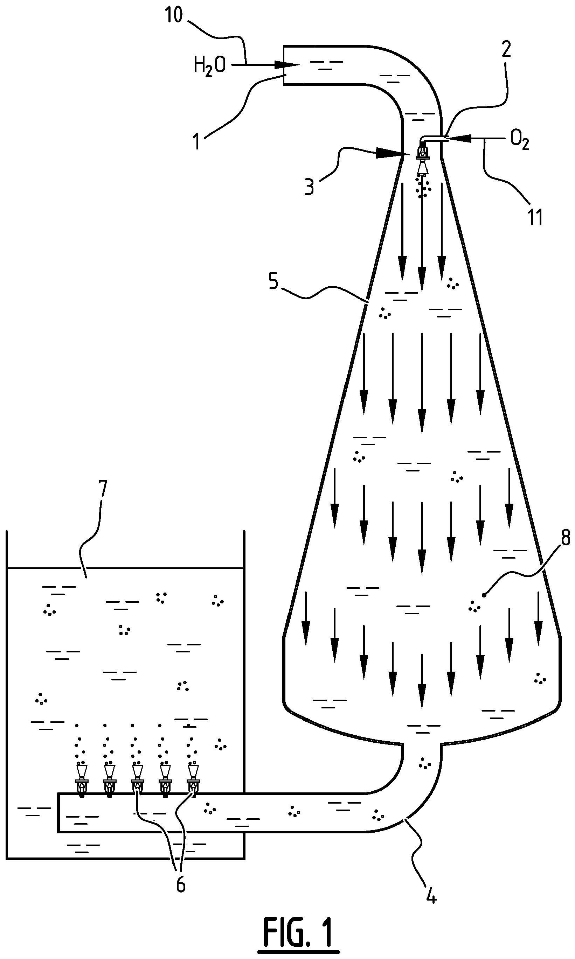

- **Figure 1:**: shows the assembly of present invention comprising a coned shaped reactor (5), a first inlet (1) for providing a flow of pressurized water (H₂O, P > 1 atm) into the coned shaped reactor, a second inlet (2) for providing pressurized air that comprises oxygen (O₂) into the coned shaped reactor, and an outlet (4) for transporting the water out of the coned shaped reactor. The first inlet and the second inlet are located at the tapered end of the coned shaped reactor and the outlet is located at the base end of the coned shaped reactor. As indicated by the arrow inside the reactor, due to the coned shape of the reactor the flow of pressurized water from the tapered end toward the base end of the reactor will decrease, thereby providing an increased oxygen uptake/absorption by the pressurized water. The outlet comprises one or more outlet valve(s) (6) for providing a venturi effect and for mixing the pressurized water that has been oxygenated (8) from the reactor with water (7) outside the reactor, such as a basin or pond of irrigation water. In this way, water that is located in the basin or pond outside the reactor that is relative low in oxygen concentration is mixed with water that has been oxygenated inside the reactor. Furthermore without using the venturi outlet valve, the high levels of oxygen present in the water will be lost when the oxygenated water is being released at ambient air pressure (1 atm), since the oxygen will then quickly diffuse directly into the air. Using the venturi outlet valve and the mixing effect, the loss of these high levels of oxygen in water is reduced or even avoided. The mixing of these oxygen rich and oxygen poor water is achieved by one or more venturi outlet valves, resulting in a optimal, homogenous mixture of both the oxygen rich and oxygen poor water and provides water that is optimal for plant growth in for example a hydroponic culture system. Furthermore, the second inlet may comprise an inlet valve (3) for providing a venturi effect and for mixing the pressurized water provided by the first inlet with the oxygen in the pressurized air provided by the second inlet, inside the coned shaped reactor.

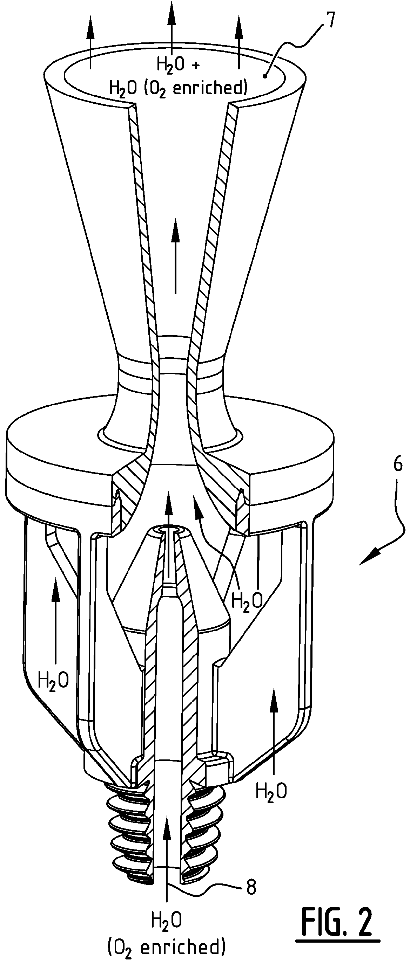

- **Figure 2:**: shows the outlet valve (6) of the assembly of present invention. The pressurized oxygenated water (H₂0 (O₂ enriched), (8)) flows from the reactor though the outlet valve. Due to the specific shape of the valve a venturi effect is provided that results in a optimal, homogenous mixture of the oxygen rich water originating from the reactor and the oxygen poor water present in the plant cultivation system (e.g. a hydroponic system). The resulting mixture (7) (H₂O + H₂O (O₂ enriched)) comprises an oxygen concentration that is optimal for plant growth in for example a hydroponic culture system.

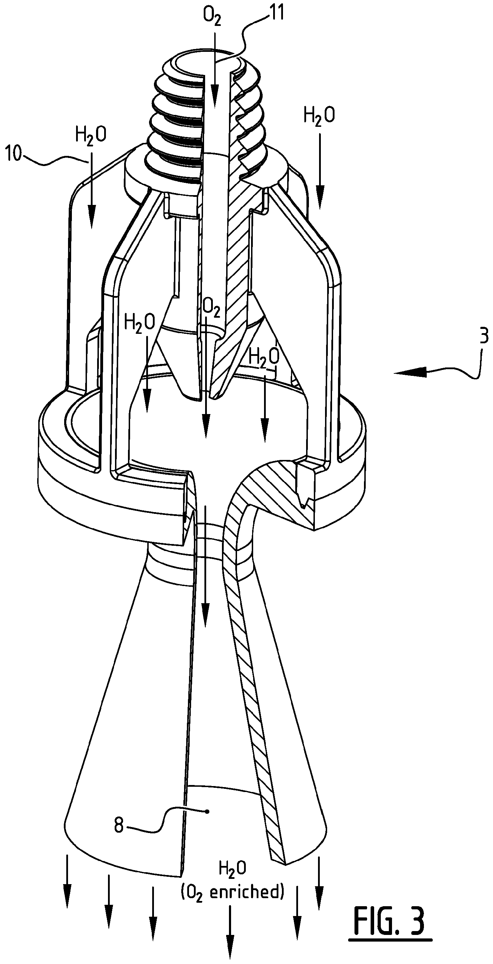

- **Figure 3**:: shows the inlet valve (3) of the second inlet (2) of the assembly of present invention. Due to the specific shape of the inlet valve (3) a venturi effect is provided that results in an optimal, homogenous mixture of the oxygen (11) in the pressurized air provided by the second inlet and the pressurized water (10) provided by the first inlet into the reactor. Pressurizing the air in which the oxygen is contained by use of the inlet valve that provides a venturi effect and leads to increased levels of absorption of oxygen in the water. The higher the concentration of gas particles in contact with the liquid, the more gas particles (in our case oxygen) will dissolve in the water. Because the water is under pressure, the oxygen remains dissolved in the water and under pressure and can be transported without the oxygen concentration decreasing.

### Example 1 - Cultivation of lettuce in a hydroponic culture system comprising the assembly of present invention for introducing oxygen into water

Lettuce is being cultivated in a hydroponic culture system. The lettuce plants are located in floats, wherein the roots of the plants are in contact with water that is located in a basin. The basin is part of the hydroponic culture system, further comprising the assembly of present invention to introduce and enrich the water with oxygen. A flow of pressurized water of 3.5 bar is provides at the first inlet (1) of the coned shaped reactor (5). The water has a temperature of 20 □C. At a second inlet (2) pressurized air of 3.5 bar is provided that comprises 95% oxygen (O2) into the coned shaped reactor. Due to the specific shape of the inlet valve (3) at the second inlet, a venturi effect is provided that results in an optimal, homogenous mixture of pressurized air and pressurized water to improve absorption of oxygen into the water. The result is water with a homogeneous and stable dissolved oxygen concentration at the level of the physical maximum holding capacity of the water. Absorption of oxygen by the pressurized water occurs at a rate of on average 6 kg/h and the flow of the pressurized water that is fed inside the coned shaped reactor is on average 15 L/s. The water is enriched in levels of oxygen and the oxygen concentration is determined to be to around 9 ppm, an oxygen concentration that is optimal for plant growth in the hydroponic culture system. The oxygenated water flows towards the outlet of the reactor wherein the outlet comprises several outlet valve(s) (6) for providing a venturi effect and for mixing the pressurized water that has been oxygenated from the reactor with water outside the reactor in the basin.

## Claims

1. An assembly for introducing oxygen into water, wherein the assembly is comprised of a coned shaped reactor, a first inlet for providing a flow of pressurized water into the coned shaped reactor, a second inlet for providing pressurized air that comprises oxygen into the coned shaped reactor, wherein the second inlet comprises a inlet valve for providing a venturi effect for mixing the pressurized water provided by the first inlet with the pressurized air provided by the second inlet, inside the coned shaped reactor, and an outlet for transporting the water out of the coned shaped reactor, wherein the first inlet and the second inlet are located at the tapered end of the coned shaped reactor and the outlet is located at the base end of the coned shaped reactor, wherein the outlet comprises one or more outlet valve(s) for providing a venturi effect and for mixing the pressurized water from the reactor with water outside the reactor.

2. Assembly according to claim 1 , wherein the assembly further comprises a pump for providing a flow of pressurized water from the first inlet to the outlet of the coned shaped reactor.

3. Assembly according to any one of the claims 1 or 2, wherein the assembly further comprises a compressor for providing a flow of pressurized air at the second inlet into the coned shaped reactor.

4. A method for introducing oxygen into water of a system for plant cultivation by an assembly according to any of the claims 1 to 3, wherein the method comprises the steps of
a) providing a flow of pressurized water in a reactor, wherein addition of pressurized air to the pressurized water inside the reactor is performed using an inlet valve for providing a venturi effect and to mix the water with the oxygen and wherein the water is pressurized to 1 to 5 bar, more preferably 2.5 to 4 bar,
b) adding pressurized air to the pressurized water inside the reactor at a temperature of between 5 to 30 °C, wherein the air is pressurized to 1 to 6 bar, preferably 1 to 5 bar, more preferably 2.5 to 4 bar, and the air comprises at least 90 wt% oxygen (O₂), preferably at least 95 wt%, more preferably at least 99 wt%,
c) absorbing of the oxygen by the pressurized water, wherein the oxygen concentration in the water is increased to at least 8 ppm, preferably at least 10 ppm, most preferably at least 12 ppm.
d) mixing the oxygen enriched water of step c) with water outside the reactor, wherein mixing is performed via one or more outlet valve(s) for providing a venturi effect.

5. Method according to claim 4 wherein said pressurized air comprises at least 97% oxygen, more preferably at least 98%, even more preferably at least 99%, most preferably 100%.

6. Method according to any of the claims 4 to 5, wherein the reactor is a coned shaped reactor.

7. Method according to any of the claims 4 to 6, wherein the system for plant cultivation is one or more selected from the group consisting of a hydroculture system, hydroponics system, vertical farming, deep-water culture, and Ebb & Flow system

8. Method according to any of the claims 4 to 7, wherein absorbing of oxygen occurs at a rate of between 0.5 and 30 kg/h, preferably between 2 and 20 kg/h, most preferably between 5 and 15 kg/h.

9. Method according to any of the claims 4 to 8, wherein the flow of pressurized water in the reactor is between 2 to 50 L/s, preferably 4 to 25 L/s, more preferably 5 to 10 L/s.

10. Method according to any of the claims 4 to 9, wherein absorption of oxygen occurs at a rate of between 0.70 and 7.0 kg/h and at an temperature of about 25 °C and a water pressure of about 3.5 bar

11. Method according to any of the claims 4 to 10, wherein in step a) at most 20 g ozone (O₃) per m3 of pressurized water is added.

## Patentansprüche

1. Anordnung zum Einbringen von Sauerstoff in Wasser, wobei die Anordnung aus einem konisch geformten Reaktor, einen ersten Einlass zum Bereitstellen eines Stroms von Druckwasser in den konisch geformten Reaktor, einen zweiten Einlass zum Bereitstellen von Druckluft, die Sauerstoff umfasst, in den konisch geformten Reaktor, besteht, wobei der zweite Einlass ein Einlassventil zum Bereitstellen eines Venturi-Effekts zum Mischen des Druckwassers, das durch den ersten Einlass bereitgestellt wird, mit der Druckluft, die durch den zweiten Einlass bereitgestellt wird, im Inneren des konisch geformten Reaktors, und ein Auslass zum Transportieren des Wassers aus dem konisch geformten Reaktor, umfasst, wobei sich der erste Einlass und der zweite Einlass an dem sich verjüngenden Ende des konisch geformten Reaktors befinden und der sich Auslass an dem Basisende des konisch geformten Reaktors befindet, wobei der Auslass ein oder mehrere Auslassventil(e) zum Bereitstellen eines Venturi-Effekts und zum Mischen des Druckwassers aus dem Reaktor mit Wasser außerhalb des Reaktors umfasst.

2. Anordnung nach Anspruch 1, wobei die Anordnung ferner eine Pumpe zum Bereitstellen eines Stroms von Druckwasser von dem ersten Einlass zu dem Auslass des konisch geformten Reaktors umfasst.

3. Anordnung nach einem der Ansprüche 1 oder 2, wobei die Anordnung ferner einen Kompressor zum Bereitstellen eines Druckluftstroms an dem zweiten Einlass in den konisch geformten Reaktor umfasst.

4. Verfahren zum Einbringen von Sauerstoff in das Wasser eines Systems für einen Pflanzenanbau durch eine Anordnung nach einem der Ansprüche 1 bis 3, wobei das Verfahren die Schritte umfasst
a) Bereitstellen eines Stroms von Druckwasser in einem Reaktor, wobei eine Zugabe von Druckluft zu dem Druckwasser im Inneren des Reaktors unter Verwendung eines Einlassventils zum Bereitstellen eines Venturi-Effekts durchgeführt wird und um das Wasser mit dem Sauerstoff zu mischen, und wobei das Wasser auf 1 bis 5 bar, mehr bevorzugt 2,5 bis 4 bar, unter Druck gesetzt wird,
b) Zugeben von Druckluft zu dem Druckwasser im Inneren des Reaktors bei einer Temperatur zwischen 5 und 30 °C, wobei die Luft auf 1 bis 6 bar, vorzugsweise 1 bis 5 bar, mehr bevorzugt 2,5 bis 4 bar, unter Druck gesetzt wird und die Luft mindestens 90 Gew.-% Sauerstoff (O₂), vorzugsweise mindestens 95 Gew.-%, mehr bevorzugt mindestens 99 Gew.-%, umfasst,
c) Absorbieren des Sauerstoffs durch das Druckwasser, wobei die Sauerstoffkonzentration in dem Wasser auf mindestens 8 ppm, vorzugsweise auf mindestens 10 ppm, am meisten bevorzugt auf mindestens 12 ppm, erhöht wird.
d) Mischen des sauerstoffangereicherten Wassers aus Schritt c) mit Wasser außerhalb des Reaktors, wobei das Mischen über ein oder mehrere Auslassventil(e) zum Bereitstellen eines Venturi-Effekts durchgeführt wird.

5. Verfahren nach Anspruch 4, bei dem die Druckluft mindestens 97 % Sauerstoff, mehr bevorzugt mindestens 98 %, noch mehr bevorzugt mindestens 99 %, am meisten bevorzugt 100 %, umfasst.

6. Verfahren nach einem der Ansprüche 4 bis 5, wobei der Reaktor ein konisch geformter Reaktor ist.

7. Verfahren nach einem der Ansprüche 4 bis 6, wobei das System für den Pflanzenanbau eines oder mehrere sind, die aus der Gruppe ausgewählt werden, bestehend aus einem Hydrokultursystem, einem Hydroponiksystem, einer vertikalen Landwirtschaft, einer Tiefwasserkultur und einem Ebb & Flow-System.

8. Verfahren nach einem der Ansprüche 4 bis 7, wobei das Absorbieren von Sauerstoff bei einer Geschwindigkeit zwischen 0,5 und 30 kg/h, vorzugsweise zwischen 2 und 20 kg/h, am meisten bevorzugt zwischen 5 und 15 kg/h, erfolgt.

9. Verfahren nach einem der Ansprüche 4 bis 8, wobei der Strom des Druckwassers in dem Reaktor zwischen 2 und 50 L/s, vorzugsweise 4 bis 25 L/s, mehr bevorzugt 5 bis 10 L/s, liegt.

10. Verfahren nach einem der Ansprüche 4 bis 9, wobei eine Absorption von Sauerstoff bei einer Rate zwischen 0,70 und 7,0 kg/h und bei einer Temperatur von etwa 25 °C und einem Wasserdruck von etwa 3,5 bar erfolgt.

11. Verfahren nach einem der Ansprüche 4 bis 10, wobei in Schritt a) höchstens 20 g Ozon (O₃) pro m3 Druckwasser zugegeben wird.

## Revendications

1. Ensemble permettant d'introduire de l'oxygène dans de l'eau, dans lequel l'ensemble est constitué d'un réacteur de forme conique, d'une première entrée permettant de fournir un flux d'eau sous pression dans le réacteur de forme conique, d'une seconde entrée permettant de fournir de l'air sous pression qui comprend de l'oxygène dans le réacteur de forme conique, dans lequel la seconde entrée comprend une soupape d'entrée permettant de fournir un effet venturi permettant de mélanger l'eau sous pression fournie par la première entrée avec l'air sous pression fourni par la seconde entrée, à l'intérieur du réacteur de forme conique, et d'une sortie permettant de transporter l'eau à l'extérieur du réacteur de forme conique, dans lequel la première entrée et la seconde entrée sont localisées au niveau de l'extrémité effilée du réacteur de forme conique et la sortie est localisée au niveau de l'extrémité de base du réacteur de forme conique, dans lequel la sortie comprend une ou plusieurs soupapes de sortie permettant de fournir un effet venturi et permettant de mélanger l'eau sous pression provenant du réacteur à l'eau à l'extérieur du réacteur.

2. Ensemble selon la revendication 1, dans lequel l'ensemble comprend en outre une pompe permettant de fournir un flux d'eau sous pression, de la première entrée à la sortie du réacteur de forme conique.

3. Ensemble selon l'une quelconque des revendications 1 ou 2, dans lequel l'ensemble comprend en outre un compresseur permettant de fournir un flux d'air sous pression au niveau de la seconde entrée dans le réacteur de forme conique.

4. Procédé permettant d'introduire de l'oxygène dans de l'eau d'un système destiné à la culture de plantes par un ensemble selon l'une quelconque des revendications 1 à 3, dans lequel le procédé comprend les étapes consistant à
a) fournir un flux d'eau sous pression dans un réacteur, dans lequel l'addition d'air sous pression à l'eau sous pression à l'intérieur du réacteur est mise en oeuvre à l'aide d'une soupape d'entrée permettant de fournir un effet venturi et pour mélanger l'eau à l'oxygène et dans lequel l'eau est mise sous pression à 1 à 5 bar, plus préférablement 2,5 à 4 bar,
b) ajouter de l'air sous pression à l'eau sous pression à l'intérieur du réacteur à une température comprise entre 5 et 30 °C, dans lequel l'air est mis sous pression à 1 à 6 bar, préférablement 1 à 5 bar, plus préférablement 2,5 à 4 bar, et l'air comprend au moins 90 % en poids d'oxygène (O₂), préférablement au moins 95 % en poids, plus préférablement au moins 99 % en poids,
c) absorber l'oxygène par l'eau sous pression, dans lequel la concentration en oxygène dans l'eau est augmentée à au moins 8 ppm, préférablement au moins 10 ppm, le plus préférablement au moins 12 ppm,
d) mélanger l'eau enrichie en oxygène de l'étape c) avec de l'eau à l'extérieur du réacteur, dans lequel le mélange est mis en oeuvre par l'intermédiaire d'une ou plusieurs soupapes de sortie permettant de fournir un effet venturi.

5. Procédé selon la revendication 4 dans lequel ledit air sous pression comprend au moins 97 % d'oxygène, plus préférablement au moins 98 %, encore plus préférablement au moins 99 %, le plus préférablement 100 %.

6. Procédé selon l'une quelconque des revendications 4 à 5, dans lequel le réacteur est un réacteur de forme conique.

7. Procédé selon l'une quelconque des revendications 4 à 6, dans lequel le système destiné à la culture de plantes est un ou plusieurs choisis dans le groupe constitué d'un système d'hydroculture, un système hydroponique, une agriculture verticale, une culture en eau profonde et un système Ebb & Flow.

8. Procédé selon l'une quelconque des revendications 4 à 7, dans lequel l'absorption d'oxygène se produit à un débit compris entre 0,5 et 30 kg/h, préférablement entre 2 et 20 kg/h, le plus préférablement entre 5 et 15 kg/h.

9. Procédé selon l'une quelconque des revendications 4 à 8, dans lequel le flux d'eau sous pression dans le réacteur est compris entre 2 et 50 L/s, préférablement 4 et 25 L/s, plus préférablement 5 et 10 L/s.

10. Procédé selon l'une quelconque des revendications 4 à 9, dans lequel l'absorption d'oxygène se produit à un débit compris entre 0,70 et 7,0 kg/h et à une température d'environ 25 °C et une pression d'eau d'environ 3,5 bar.

11. Procédé selon l'une quelconque des revendications 4 à 10, dans lequel à l'étape a) est ajouté au plus 20 g d'ozone (O₃) par m3 d'eau sous pression.
